Europäisches Patentamt

European Patent Office

Office européen des brevets

(19)

(11) Veröffentlichungsnummer : **0 166 954**
**B1**

(12)

# EUROPÄISCHE PATENTSCHRIFT

(45) Veröffentlichungstag der Patentschrift :
**11.10.89**

(21) Anmeldenummer : **85106464.2**

(22) Anmeldetag : **25.05.85**

(51) Int. Cl.⁴ : **H 02 H 7/26**, H 02 J 3/36

(54) **Verfahren zur Reduzierung von dynamischen Ueberspannungen in einem Wechselstromnetz.**

(30) Priorität : **04.07.84 CH 3217/84**

(43) Veröffentlichungstag der Anmeldung :
**08.01.86 Patentblatt 86/02**

(45) Bekanntmachung des Hinweises auf die Patenterteilung : **11.10.89 Patentblatt 89/41**

(84) Benannte Vertragsstaaten :
**AT CH DE GB LI SE**

(56) Entgegenhaltungen :
**DE—A— 1 943 646**
**DE—A— 2 418 468**
**DE—A— 2 705 242**
**US—A— 3 968 419**
**IEE PROC., Band 127, Pt.C, Nr. 3, Mai 1980, Seiten 189-198; R. YACAMINI et al.: "Overvoltages caused by blocking twelve pulse h.v.d.c. schemes"**

(73) Patentinhaber : **BBC Brown Boveri AG**
**Haselstrasse**
**CH-5401 Baden (CH)**

(72) Erfinder : **Güth, Gerhard, Dr.**
**General Guisanstrasse 31**
**CH-5415 Nussbaumen (CH)**
Erfinder : **Kühn, Walter, Dr.**
**Im Tobelacher 19**
**CH-5406 Rütihof (CH)**
Erfinder : **Linhofer, Gerhard**
**Allmendstrasse 33A**
**CH-5400 Baden (CH)**
Erfinder : **Sadek, Kadry, Dr.**
**Silcherweg 5**
**D-7898 Lauchringen (DE)**

**Beschreibung**

Bei der Erfindung wird ausgegangen von einem Verfahren zur Reduzierung von dynamischen Ueberspannungen in einem Wechselstromnetz, das mit einem Umrichter mit einem Gleichstromzwischenkreis in Wirkverbindung steht, nach dem Oberbegriff des Patentanspruchs 1.

Mit diesem Oberbegriff nimmt die Erfindung auf einen Stand der Technik von Verfahren zur Reduzierung von dynamischen Ueberspannungen in einem Wechselstromnetz Bezug, wie er in der US-A-3,968,419 beschrieben ist. Dort ist ein Verfahren zum Uebergang von bipolarem in monopolaren Betrieb eines Umrichters mit Gleichstromzwischenkreis mit zwei metallischen Gleichstromleitungen und je zwei in Reihe geschalteten Stromrichtern in der Gleichrichter- und Wechselrichterstation beschrieben, bei dem jeder der beiden in Reihe geschalteten Stromrichter über je eine Drossel mit einem Erdungsschalter verbunden ist. Jeder Stromrichter ist ausserdem über die zugehörige Drossel kurzschliessbar. Der Strom eines Pols mit einem fehlerbehafteten, in der Folge durch eine Kurzschlussvorrichtung kurzgeschlossenen Stromrichter wird auf einen Wert erhöht, der dem Strom in der Leitung des anderen Pols entspricht, bevor ein Erdungsschalter geöffnet wird. Während der Strom in dem fehlerbehafteten Pol vorübergehend erhöht wird, wird durch Begrenzung des Zündwinkels des fehlerfreien Stromrichters auf ungefähr 90° dafür gesorgt, dass die Spannung dieses Pols innerhalb bestimmter Grenzen bleibt. Eine Spannungsregelung auf der Drehstromseite findet dabei nicht statt. Beim Kurzschliessen eines Stromrichters werden unerwünschte Blindlastoszillationen erzeugt.

Die Erfindung, wie sie im Patentanspruch (1) definiert ist, löst die Aufgabe, ein Verfahren zur Reduzierung von dynamischen Ueberspannungen in einem Wechselstromnetz, das mit einem Umrichter mit einem Gleichstromzwischenkreis in Wirkverbindung steht, anzugeben, das mit einfachen Mitteln zu realisieren ist.

Ein Vorteil der Erfindung besteht darin, dass durch eine plötzliche Unterbrechung des Uebertragungsbetriebes, z. B. einer Hochspannungsgleichstromübertragungsanlage (HGÜ), verursachte dynamische Ueberspannungen kurzfristig reduziert werden können. Ursache der plötzlichen Unterbrechung kann z. B. sein :

— Ausfall einer Stromrichtergruppe,
— Leitungs- oder Sammelschienenfehler in einem der beiden durch die HGÜ verbundenen Netze,
— Leitungsfehler auf der Gleichstromleitung einer HGÜ-Fernübertragung.

Ein weiterer Vorteil der Erfindung liegt darin, dass das Verfahren auch bei bestehenden Anlagen verwendet werden kann. Zur Blindleistungsregelung werden die vorhandenen Stromrichter verwendet. Es sind keine aufwendigen und teuren Zusatzeinrichtungen erforderlich.

Zum einschlägigen Stand der Technik wird zusätzlich auf IEE Proc., Vol. 127, Pt. C. No. 3, 1980, S. 189-198 verwiesen, in der Verfahren zur Reduzierung von Ueberspannungen, die bei einer Blockierung eines 12pulsigen Hochspannungsgleichrichters auftreten können, angegeben sind. Es kann ein Stromrichtertransformator verwendet werden, dessen Magnetkern mit zunehmender Stromstärke schnell in Sättigung getrieben wird, wobei dessen Magnetisierungskennlinie bei niedrigen Strömen einen steil verlaufenden und bei hohen Strömen einen flach verlaufenden Kurvenabschnitt aufweist. In zweiter Linie kommen Filter, insbesondere für die fünfte Harmonische der Grundfrequenz, und statische Kondensatoren in Betracht.

Ein Nachteil der angegebenen Verfahren besteht darin, dass die erforderlichen Zusatzeinrichtungen aufwendig und teuer sind.

Netzkommutierte Stromrichter einer HGÜ-Anlage wirken im Netz als Blindleistungsverbraucher. Die Grösse der Blindleistungsabsorption ist abhängig von der Grösse der Kommutierungsreaktanzen, die hauptsächlich aus den Streureaktanzen des Stromrichtertransformators bestehen, dem Zündwinkel und der Höhe des momentanen Betriebsstromes. Ein Teil der Blindleistung wird von den zur Reduktion von Oberschwingungen installierten Filtern geliefert, d. h. von Saugkreisen, welche für die Grundfrequenz ein kapazitives Verhalten aufweisen. Der Rest der benötigten Blindleistung wird entweder vom Drehstromnetz oder von zusätzlichen Kompensationseinrichtungen, meist von Kondensatorbatterien, bezogen.

Tritt nun in einem der beiden durch die HGÜ verbundenen Netze eine schwere Störung auf, welche die vorübergehende Unterbrechung des Leistungsaustausches über eine HGÜ erzwingt, bedeutet dies für das andere, ungestörte Netz nicht nur eine Aenderung der Wirkleistungsbilanz, sondern auch immer damit verbunden einen Blindlastabwurf. Insbesondere, wenn der Anschlusspunkt der HGÜ am ungestörten, nicht fehlerbehafteten Netz ein Netzknoten mit kleiner Kurzschlussleistung ist (z. B. das Ende einer langen Drehstromleitung), treten an diesem Netzknoten hohe dynamische Ueberspannungen auf, welche zur Gefährdung von Anlagenteilen oder zu Betriebsstörungen führen können.

Die Erfindung wird nachstehend anhand von Ausführungsbeispielen erläutert. Es zeigen :

Fig. 1 ein Prinzipschaltbild einer Kupplung zweier Drehstromnetze über einen Umrichter für eine HGÜ-Kurzkupplung und

Fig. 2 ein Prinzipschaltbild gemäss Fig. 1 für eine HGÜ-Fernübertragung.

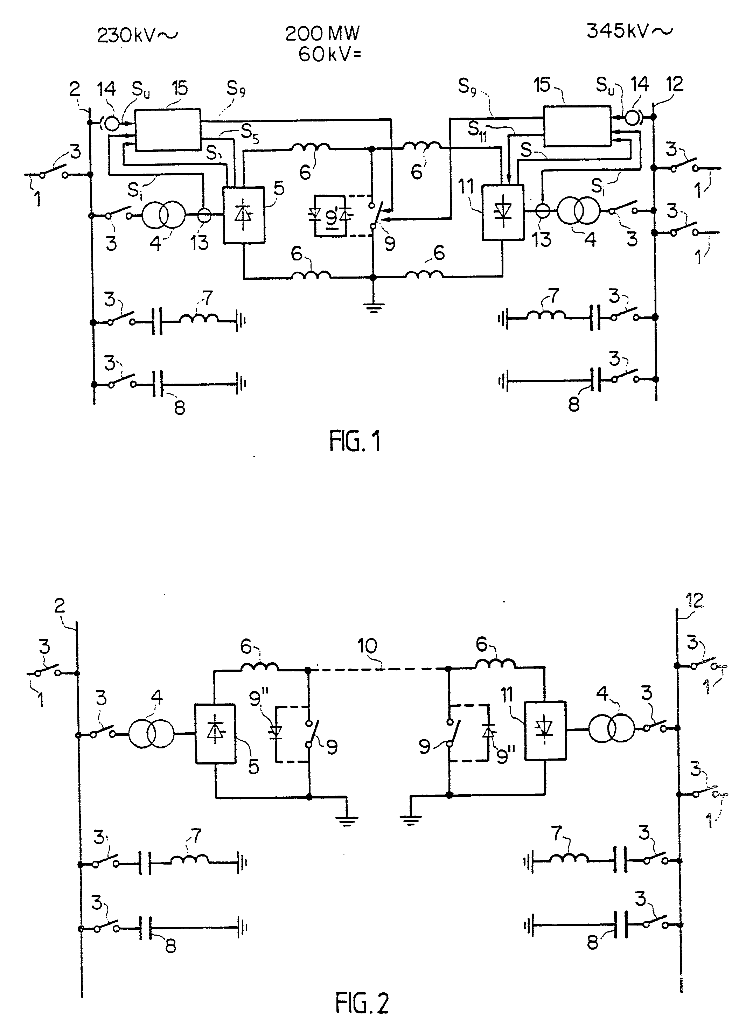

In Fig. 1 sind mit 1 Drehstromleitungen bezeichnet, die über Schalter oder Schaltfelder 3 an Drehstromsammelschienen 2 bzw. 12 angeschlossen werden können. Die Drehstromsammelschiene 2 führt z. B. dreiphasigen Wechselstrom von 50 Hz mit einer Wechselspannung von 230 kV und die Drehstromsammelschiene 12 dreiphasigen Wechselstrom von 50 Hz mit einer Wechselspannung von 345 kV.

Die beiden Drehstromsammelschienen 2 und 12 sind über einen Umrichter mit Stromrichtergruppen 5 und 11, in deren Gleichstromzwischenkreis je zwei Glättungsdrosseln 6 geschaltet sind, verbunden. Für den Fall, das elektrische Energie von der Drehstromsammelschiene 2 zur Drehstromsammelschiene 12 übertragen werden soll, wird die Stromrichtergruppe 5 als Gleichrichter betrieben und die Stromrichtergruppe 11 als Wechselrichter, während bei entgegegesetzter Energieflussrichtung die Stromrichtergruppe 5 als Wechselrichter und die Stromrichtergruppe 11 als Gleichrichter betrieben wird. Die im Gleichstromzwischenkreis einer HGÜ übertragene elektrische Leistung liegt z. B. bei 200 MW und die Gleichspannung z. B. bei 60 kV.

Die Stromrichtergruppen 5 und 11 sind an die Drehstromsammelschienen 2 und 12 jeweils über Stromrichtertransformatoren 4 und Schaltfelder 3 angeschlossen.

Die Stromrichtergruppen 5 und 11 sind auf jeweils einer Seite geerdet.

Der Erdungspunkt ist über einen Kurzschliesser bzw. eine Kurzschlussvorrichtung 9 mit der hochspannungsseitigen Stromschiene verbunden, wobei der Anschlusspunkt zwischen zwei in Reihe geschalteten Glättungsdrosseln 6 in dieser Gleichstromübertragungsleitung gewählt ist. Der Kurzschliesser 9 ist vorzugsweise ein mechanischer Schalter. Es kann aber auch ein Wechselstromschalter 9' mit antiparallel geschalteten Thyristoren als Kurzschliesser verwendet werden, jedoch betragen dessen Kosten etwa das 3fache bis 10fache eines mechanischen Schalters.

Die Stromrichtergruppen 5 und 11 werden von je einer an sich bekannten Regeleinrichtung 15 durch je ein Steuersignal $S_5$ bzw. $S_{11}$ gesteuert. Auch der Kurzschliesser 9 bzw. der Thyristorschalter 9' erhält ein Ein-/Ausschaltsignal $S_9$ von diesen beiden Regeleinrichtungen 15. Jede Regeleinrichtung 15 erhält eingangsseitig ständig ein Spannungssignal Su über einen Spannungsmesser 14 von der Drehstromsammelschiene 2 bzw. 12, ferner ständig ein Stromsignal Si über einen Strommesser 13, der in der Stromzuführung vom Stromrichtertransformator 4 zur jeweiligen Stromrichtergruppe 5 bzw. 11 angeordnet ist, und gegebenenfalls ein Schutzauslösesignal S von der jeweiligen Stromrichtergruppe 5 bzw. 11, falls eine nicht dargestellte, an sich bekannte Schutzeinrichtung in der jeweiligen Stromrichtergruppe bei Auftreten eines Fehlers anspricht und das Schutzauslösesignal S erzeugt.

Ist infolge einer Netzstörung oder infolge einer Störung in einem Stromrichter eine der beiden Stromrichtergruppen, z. B. die Stromrichtergruppe 5, nicht mehr steuerbar, so erlaubt das Schliessen der Kurzschlussvorrichtung bzw. des Kurzschliessers 9 der anderen Stromrichtergruppe 11 weiterhin in Betrieb zu bleiben und Blindleistung zu absorbieren. Die Blindleistungskompensation in der Stromrichtergruppe 11 erfolgt durch eine Regelung des Stromes durch diese Stromrichtergruppe, wobei jedoch ein vorgebbarer oberer Stromgrenzwert nicht überschritten werden darf. Um in einem Störfall das Auftreten von Ueberströmen infolge des Schliessens der Kurzschlussvorrichtung 9 zu vermeiden, wird, vor oder gleichzeitig mit dem Einschaltbefehl an den Kurzschliesser 9 durch einen direkten Steuereingriff in die Regelung der in Betrieb verbleibenden Stromrichtergruppe 11 eine Zündwinkelverstellung auf ca. 90° durchgeführt. Danach wird der Zündwinkel der im Betrieb verbleibenden Stromrichtergruppe in Abhängigkeit von der Wechselspannung des an diese Stromrichtergruppe angeschlossenen Wechselstromnetzes so geregelt, dass eine Ueberspannung dieser Wechselspannung verringert wird. Diese Art des Kurzschlussbetriebes entspricht der Betriebsweise eines statischen Kompensators.

Die Netzstörung wird in Abhängigkeit davon detektiert, dass das Spannungssignal Su einen vorgebbaren Spannungsgrenzwert unterschreitet. Die Störung in einem Stromrichter wird der Regeleinrichtung 15 durch das Vorhandensein des Schutzauslösesignals S mitgeteilt.

Zur Verminderung von Oberschwingungen in den Drehstromnetzen und zur Kompensation von Blindleistung sind über Schaltfelder 3 an die Drehstromsammelschienen 2 und 12 anschliessbare Kondensatorbatterien 8 und Filterkreise 7, die eine Drossel in Reihe mit einem Kondensator aufweisen, vorgesehen.

Das in Fig. 2 dargestellte Ausführungsbeispiel einer HGÜ-Fernübertragung weist im wesentlichen Unterschied zu dem in Fig. 1 gezeigten Ausführungsbeispiel zwei Kurzschliesser 9 auf, die jeweils einer Stromrichterstation zugeordnet sind, wobei die Stationen über eine Gleichstromleitung 10 miteinander verbunden sind. Anstelle mechanischer Schalter können Thyristorschalter 9" mit nur einem Thyristor, der in Stromrichtung gepolt ist, vorgesehen sein.

Die negativen Pole der beiden Umrichterstationen sind nicht durch eine metallische Leitung, sondern über Erde verbunden. Zwei Glättungsdrosseln 6 sind in Reihe zu der positiven Gleichstromleitung 10 vorgesehen. Die Regeleinrichtungen 15 entsprechen denen in Verbindung mit Fig. 1 erläuterten und sind der Uebersichtlichkeit halber nicht dargestellt.

**Patentansprüche**

1. Verfahren zur Reduzierung von dynamischen Überspannungen in einem Wechselstromnetz, das mit einem Umrichter mit einem Gleichstromzwischenkreis, insbesondere zur Hochspannungs-Gleichstromübertragung, in Wirkverbindung steht,

   a) wobei im Gleichstromzwischenkreis zwischen mindestens einem als Gleichrichter (5, 11) und mindestens einem als Wechselrichter (11, 5) betriebenen Stromrichter des Umrichters mindestens eine Kurzschlussvorrichtung (9, 9', 9") einausschaltbar ist,

b) welche Kurzschlussvorrichtung in ungestörtem Zustand des Umrichters ausgeschaltet bzw. offen ist und

c) wobei in Abhängigkeit vom Eintritt eines Störfalles, infolgedessen einer der Stromrichter (5, 11) nicht mehr steuerbar ist, ein Kurzschliessignal (S₉) zum Kurzschliessen des nicht mehr steuerbaren Stromrichters an die mindestens eine Kurzschlussvorrichtung (9, 9', 9") übertragen wird, dadurch gekennzeichnet,

d) dass der Zündwinkel des mindestens einen in Betrieb verbleibenden Stromrichters bei Eintritt eines Störfalles zunächst auf ca. 90° gesteuert und

e) danach in Abhängigkeit von der Wechselspannung des an diesen Stromrichter (5, 11) angeschlossenen Wechselstromnetzes (2, 12) so geregelt wird, dass eine Überspannung dieser Wechselspannung verringert wird.

2. Verfahren nach Anspruch 1, dadurch gekennzeichnet, dass das Kurzschliessignal (S₉) zum Kurzschliessen des nicht mehr steuerbaren Stromrichters (5, 11) gleichzeitig mit dem Steuersignal (S₅, S₁₁) für die Zündwinkelverstellung erzeugt wird.

3. Verfahren nach Anspruch 1 oder 2, dadurch gekennzeichnet, dass ein Störfall in Abhängigkeit von einer Grenzwertunterschreitung eines Spannungsignals (Su) in der Wechselstromzuleitung zu dem jeweiligen Stromrichter (5, 11) detektiert wird.

4. Verfahren nach Anspruch 1 oder 2, dadurch gekennzeichnet, dass ein Störfall in Abhängigkeit von einem Schutzauslösesignal (S) eine Stromrichters (5, 11) detektiert wird.

## Claims

1. Method for reducing dynamic overvoltages in an alternating-current system which is effectively connected to a converter having an intermediate direct-current circuit, particularly for the transmission of high-voltage direct current,

a) in which method at least one short-circuit device (9, 9', 9") can be switched on/off in the intermediate direct-current circuit between at least one static converter, operated as rectifier (5, 11) and at least one static converter, operated as inverter (11, 5), of the converter,

b) which short-circuit device is switched off or open in the undisturbed condition of the converter, and

c) in dependence on the occurence of a disturbance as a result of which one of the static converters (5, 11) is no longer controllable, a short-circuiting signal (S₉) for short-circuiting the static converter which is no longer controllable being transmitted to the at least one short-circuit device (9, 9',9"), characterised in that

d) the firing angle of the at least one static converter remaining in operation is initially adjusted to approximately 90° in the event of a disturbance and

e) thereafter is regulated in dependence on the alternating voltage of the alternating-current system (2, 12) connected to this static converter (5, 11), in such a manner that an overvoltage of this alternating voltage is reduced.

2. Method according to Claim 1, characterised in that the short-circuiting signal (S₉) for short-circuiting the no longer controllable static converter (5, 11) is generated simultaneously with the control signal (S₅, S₁₁) for the adjustment of the firing angle.

3. Method according to Claim 1 or 2, characterised in that a case of disturbance is detected in dependence on a voltage signal (Su) dropping below a limit value in the alternating-current feed to the respective static converter (5, 11).

4. Method according to Claim 1 or 2, characterised in that a case of disturbance is detected in dependence on a protective triggering signal (S) of a static converter (5, 11).

## Revendications

1. Procédé pour la réduction des surtensions dynamiques dans un réseau de courant alternatif, qui est en liaison active avec un mutateur avec un circuit intermédiaire à courant continu, en particulier pour la transmission de courant continu à haute tension,

a) où, dans le circuit intermédiaire à courant continu, au moins un dispositif de mise en court-circuit (9, 9', 9") peut être enclenché/déclenché entre au moins un convertisseur de courant du mutateur fonctionnant en redresseur (5, 11) et au moins un convertisseur de courant du mutateur fonctionnant en onduleur (11, 5),

b) lequel dispositif de mise en court-circuit est déclenché ou ouvert à l'état non perturbé du mutateur et

c) où en réponse à la survenance d'une panne, à la suite de laquelle un des convertisseurs de courant ne peut plus être commandé, un signal de court-circuit (S₉) pour la mise en court-circuit du convertisseur de courant qui ne peut plus être commandé est transmis au moins audit dispositif de mise en court-circuit (9, 9', 9"), caractérisé en ce que

d) l'angle d'allumage d'au moins un convertisseur de courant restant en fonctionnement est d'abord décalé d'environ 90° lors de la survenance d'une panne, et

e) est ensuite, selon la tension alternative du réseau de courant alternatif (2, 12) raccordé à ce convertisseur de courant (5, 11), réglé de telle façon qu'une surtension de cette tension alternative soit réduite.

2. Procédé suivant la revendication 1, caractérisé en ce que le signal de court-circuit (S₉) pour la mise en court-circuit du convertisseur de courant (5, 11) qui ne peut plus être commandé est produit en même temps que le signal de commande (S₅, S₁₁) pour le décalage de l'angle d'allumage.

3. Procédé suivant la revendication 1 ou 2, caractérisé en ce qu'une situation de panne est détectée en réponse à un franchissement vers le bas d'une valeur limite d'un signal de tension (Su) dans la ligne d'alimentation en courant alternatif du convertisseur de courant correspondant (5, 11).

4. Procédé suivant la revendication 1 ou 2, caractérisé en ce qu'une situation de panne est détectée en réponse à l'émission d'un signal de déclenchement de sécurité (S) d'un convertisseur de courant (5, 11).

230kV~    200 MW    345kV~
          60kV=

FIG. 1

FIG. 2